## Europäisches Patentamt

## European Patent Office

## Office européen des brevets

(19)

(11) Publication number: **0 107 281**
**A2** ·

(12) **EUROPEAN PATENT APPLICATION**

(21) Application number: **83304595.8**

(22) Date of filing: **09.08.83**

(51) Int. Cl.³: **B 29 C 17/03**

(30) Priority: **30.09.82 US 429935**

(43) Date of publication of application: **02.05.84**
**Bulletin 84/18**

(84) Designated Contracting States: **BE DE FR GB IT NL**

(71) Applicant: **MOBIL OIL CORPORATION, 150 East 42nd Street, New York New York 10017 (US)**

(72) Inventor: **Hasenauer, Randal John, 17 Gateway Road, Fairport New York 14450 (US)**

(74) Representative: **West, Alan Harry, Mobil Court 3 Clements Inn, London WC2A 2EB (GB)**

(54) **A method of shaping polyacrylonitrile film.**

(57) A biaxially oriented acrylonitrile polymer film at least substantially free of moisture and/or solvent is subjected to a temperature sufficient to permit deformation thereof, whereafter the film is deformed into a predetermined shape and, while so-deformed, is cooled to cause retention of said shape.

EP 0 107 281 A2

F-1902                          -1-

## A METHOD OF SHAPING POLYACRYLONITRILE FILM

This invention relates to a method of shaping polyacrylonitrile film.

It has previously been believed that polyacrylonitrile
homopolymers cannot be thermoformed in the usual sense of the word.
For example, in U.S. Patent No. 3,380,949 it is stated: "It is known
that acrylonitrile polymers including homopolymers and copolymers
containing about 90% by weight or more of polymerized acrylonitrile are
not thermoplastic in nature and cannot be formed at elevated tempera-
tures by milling, extrusion, compression molding, drawing, or by other
commonly employed operations normally used in the forming of shaped
articles from truly thermoplastic materials." Further, in Molecular
Reviews Interscience Publishers, John Wiley and Sons, New York, Vol. 3,
page 115, 1968, it states: "Polyacrylonitrile has no thermoplastic
properties and for a time was found to be soluble only in aqueous salt
solutions or aqueous solutions of mineral acids."

It has, however, now been found that a biaxially oriented
acrylonitrile polymer film can be thermoformed into a desired shape.

Accordingly, the invention resides in a method of shaping an
oriented acrylonitrile polymer film comprising the steps of:

    (a) providing a biaxially oriented acrylonitrile polymer film
        at least substantially free of moisture and/or solvent;

    (b) subjecting said film to a temperature sufficient to
        permit deformation thereof;

    (c) deforming the so-treated film to a predetermined shape;
        and

    (d) while so-deformed cooling the film to cause retention of
        said shape.

Preferably the acrylonitrile polymer film is prepared from a
precursor which contains at least 90% by weight of acrylonitrile
monomer, more preferably at least 95% by weight of acrylonitrile
monomer. It is particularly preferred that the acrylonitrile polymer
is essentially the homopolymer, polyacrylonitrile. The polyacrylo-

nitrile film must be capable of assuming a significant deviation from
the normal after thermosoftening followed by retention of this
deviation on cooling.

It has been determined that biaxially oriented polyacrylonitrile (PAN) films prepared as described in U.S.  Patent No. 4,066,731
can be thermoformed by more or less conventional techniques.  The
present process is, however, not limited to thermoforming PAN films
prepared according to the process of this prior patent but can also be
applied to PAN films prepared by other techniques which produce PAN
films of the same characteristics as the aforesaid patent.  Generally,
the preferred biaxially oriented polyacrylonitrile film is the homopolymer.  Where a copolymer is employed it is understood that the
nonacrylonitrile monomer thereof must not be present in a proportion
large enough to change the basic characteristic of the film.  In other
words, it is appreciated that significant percentages of a comonomer
can impart characteristics to the resulting copolymer which would be
more representative of the corresponding nonacrylonitrile polymer.
These copolymers are not contemplated herein.

The PAN may be prepared in any conventional manner, as by
emulsion polymerization, suspension polymerization, or solution
polymerization.

Because PAN films are difficult to seal to other surfaces, for
some thermoformed structures it is preferred that the PAN film be
laminated to or coated by another film prior to thermoforming.  Any
film combination may be employed and included among the films which may
be laminated to the PAN film are film forming homopolymers and copolymers of one or more alpha olefins, for example, those having from two
to eight carbon atoms therein.  Suitable alpha olefins include
ethylene, propylene, butene-1 and pentene-1, together with copolymers
of the alpha olefins with, for example, up to 20% total, of one or more
other monomers copolymerizable with alpha olefins.

Another class of materials which may be laminated to the PAN
film are certain ionomer resins which may be characterized as metal-
containing ionic copolymers obtained by the reaction between ethylene or an alpha-olefin with an ethylenically unsaturated monocarboxylic
acid, such as, acrylic or methacrylic acid, wherein at least 10% of
said carboxylic acid groups are neutralized by an alkali metal ion or
zinc ion.  Such ionomer resins are disclosed in U.S. Patent No.
3,496,061.  The ionomer film may be applied to the PAN film by itself
or the ionomer polymer may be in admixture with a high density polyolefin containing a minor amount of the ionomer.  A typical ionomer
sold under the trade name Surlyn 1652, contains zinc as the major
cation and has the following average physical properties for a one mil
(0.025 mm) blown film extruded to a 2:1 blow-up ratio:  Density 0.939
g/cc, melt index 4.4 decigm/min, tensile strength 2850 psi (19651 kPa)
tensile yield 1870 psi·(12894 kPa), elongation 580%, Elmendorf tear
125/140 g/mil (0.025 mm) (MD/TD); and dart drop (2-3 in [5-7.6 cm]) 220
g/mil (0.025 mm).

When biaxially oriented PAN film is to be thermoformed any
thickness can be employed, however, it is preferred that the film have
a thickness ranging from 0.5 mils to 20 mils (0.01 to 0.51 mm) and
preferably from 0.65 mils to 1.5 mils (0.02 to 0.38 mm).

The terms "thermoforming" and "thermoformation" are used in
their usual sense and any of the prior art techniques for thermoforming
films in general may be employed in the present process.  More
specifically the thermoformation techniques disclosed in the Modern
Plastics Encyclopedia, Vol. 57, No. 10 A 1980-81, pages 406 et. seq.
may be employed.

It is not understood why biaxially oriented PAN film having
the characteristics of that formed by the process of U.S. Patent No.
4,066,731 can be thermoformed when prior knowledge on the subject of
thermoforming acrylonitrile polymer was to the contrary.

## EXAMPLE

### Preparation of PAN Film

Biaxially oriented homopolymer polyacrylonitrile film is
prepared by the process disclosed in U.S. Patent No.  4,066,731.  In general the procedure involves heat-dissolving commercially available
PAN homopolymer resin (available from DuPont Corporation as polymeric
acrylonitrile Type A homopolymer) into dimethylsulfoxide (DMSO) to form
an ultimately castable solution containing at least 30% by weight PAN.
The hot PAN-DMSO solution is fed under pressure to a heated die which
extrudes a thin film of polymer solution onto a cold drum surface.
After contacting an aqueous solution of DMSO on the drum surface, the
now self-supporting film is stripped from the drum and passed through a
countercurrent aqueous bath where the DMSO is removed and replaced by
water, thereby forming an aquagel film. This film passes through a
machine direction orienter comprising, a first heated roll maintained
at 75°C and thereafter a series of orienting rolls which are maintained
at sufficient differential speeds to longitudinally stretch the film
about 2-3 times, thereby providing a uniaxially oriented aquagel PAN
film. The uniaxially oriented film is passed over suitable tensioning
rolls prior to directing the film into a tentering unit. In the
tentering unit, transverse direction orientation is accomplished in the
usual manner by attaching edge clips to the film progressively and
stretching the film perpendicular to its machine direction travel. In
the transverse direction orienter unit, the film is preferably
contacted with moist, hot gas, e.g. air, to prevent excessive water
loss. Thereafter, the biaxially oriented film is dried under
constraint to remove water and other volatile materials which may be
present in the film. Prior to drying the biaxially oriented film, the
film contains a considerable percentage of water. This water is not in
its conventional free state, but rather it appears that the water has
entered the interstices and voids present in the film on a molecular
scale so that it is an integral part of the film. It is believed that
this is to a considerable extent responsible for permitting the
excellent biaxial orientation of the film.

While this is an example of the formation of the preferred
biaxially oriented PAN, it is also understood that the PAN film can be
prepared in situ as disclosed in the specific example of U.S. Patent
No. 4,066,731. In either event, the resulting biaxially oriented dry PAN film will have optical clarity, low oxygen permeability, low water
vapor permeability, a tensile strength of from 28,000 to 39,000 psi
(193060 to 268905 kPa) and a modulus of elasticity of 750,000 to
830,000 psi (5171250 to 5722850 kPa).

Thermoforming the PAN Film

Using 1.0 mil (0.025 mm) thick biaxially oriented PAN film,
prepared as in the foregoing description, and 2.0 mil (0.05 mm) thick
commercially available Surlyn 1601 film, a laminate of the two was
prepared.  The Surlyn 1601 contains sodium as the major cation and has
the following average physical properties for a 2 mil (0.05 mm) blown
film:  density 0.940 g/cc, melt index 1.3 decigm/min, tensile strength
5300 MD psi (36544 kPa) and 4800 TD psi (33096 kPa), tensile yield 2500
MD psi (17238 kPa) and 2000 TD psi (13790 kPa), elongation 350% MD and
450% TD, Elmendorf tear 18-22 MD and 28-32 TD g/mil (0.025 mm).
Thermoformed structures were prepared on a Labform Thermoformer.  A
wooden female forming die was employed.  The cavity was 6 inches (15
cm) long and 4 inches (10 cm) wide with 1/2 inch (1.3 cm) corner and
bottom radius.  The die was designed so that the depth could be changed
with the use of 1/4 inch (0.6 cm) spacers.  A 7 inch x 5 inch (18 cm x
13 cm) top clamp ring was used to hold the film.  The mechanics of the
thermoformation were as follows:

A 14 inch x 12 inch (36 cm x 30 cm) film sample laminate was
put into the retaining frame with the PAN side of the lamination facing
the die.  The frame was then retracted into an oven of calrod heaters
and, after a set dwell time in the oven, the frame was retracted out of
the oven.  The bottom die was then moved up and the clamp ring moved
down, thereby sandwiching the film between and a vacuum was engaged so
as to draw the film into the female die.  After the film had cooled,
with vacuum holding the film in the die, the vacuum was released.  The
clamping ring and die were then retracted and the thermoformed
structure was removed from the retaining frame.

Using the foregoing equipment and technique, thermoformed
structures having the following depths of draw were successfully thermoformed:  1/2 in (1.3 cm), 3/4 in (1.9 cm), 1 in (2.5 cm), 1.25 in
(3.2 cm), 1.5 in (3.8 cm), 1.75 in (4.4 cm) and 2 in (5.1 cm).  The
oven was set at 1000°F (538°C) at the top and 1100°F (543°C) at the
bottom.  Dwell time in the oven ranged from four seconds for the 1/2
inch (1.3 cm) draw structure to six seconds for the 2 inch (5.1 cm)
draw structure.  Under these conditions, the film temperature was above
the m.p. of the Surlyn but below that of the PAN.  The vacuum
controller was set for from 26 - 27 inches (66 - 69 cm) of mercury.
The Surlyn film was present solely to permit the PAN structure to be
sealed to another surface.

0107281

F-1902                              -7-


<u>CLAIMS</u>:

1.  The method of shaping an oriented acrylonitrile polymer
film comprising the steps of:

    (a)  providing a biaxially oriented acrylonitrile polymer film
         at least substantially free of moisture and/or solvent;

    (b)  subjecting said film to a temperature sufficient to
         permit deformation thereof;

    (c)  deforming the so-treated film to a predetermined shape;
         and

    (d)  while so-deformed cooling the film to cause retention of
         said shape.


2.  The method of claim 1 wherein the acrylonitrile polymer is
a polymer containing at least 90% by weight of acrylonitrile monomer
units.


3.  The method of claim 1 wherein the acrylonitrile polymer is
acrylonitrile homopolymer.


4.  The method of any preceding claim wherein said
acrylonitrile polymer film has a different film laminated thereto prior
to the deformation step (c).


5.  A shaped article produced by thermoforming a biaxially
oriented acrylonitrile polymer film.


2456n/0033H